# EUROPEAN PATENT APPLICATION

(11) **EP 4 840 717 A1**
(43) Date of publication of application: **18.11.2026**
(21) Application number: 25176414.8
(22) Date of filing: 14.05.2025
(51) Int. Cl.: B60W 40/02, B60R 21/00

(54) **METHOD FOR DETERMINING A SUBMERSION OF A VEHICLE, METHOD FOR CAUSING ADJUSTMENT OF AT LEAST ONE SAFETY FEATURE OF A VEHICLE, DATA PROCESSING APPARATUS, COMPUTER PROGRAM, COMPUTER-READABLE STORAGE MEDIUM, AND VEHICLE**

(71) Applicant: Volvo Car Corporation, 405 31 Göteborg (SE)
(72) Inventor: SONESSON, Mikael, 40531 Göteborg (SE); JOHANSSON, Björn, 40531 Göteborg (SE)
(74) Representative: Kransell & Wennborg KB

(57) **Abstract**

The disclosure relates to a method for determining a submersion of a vehicle (10). The method comprises obtaining first data indicative of a suspension level of at least one suspension (25a, 25b) of the vehicle (10). The method further comprises obtaining second data indicative of a proximity to an object in surroundings of the vehicle (10) through a first medium (45). Further, the method comprises determining, based on the obtained first and second data, the submersion of the vehicle (10) when both the obtained first data indicates a full extension of the at least one suspension (25a, 25b) and the obtained second data indicates a transition from the first medium (45) to a second medium (50). The first medium (45) is different from the second medium (50). The disclosure further relates to a method for causing adjustment of at least one safety feature of a vehicle (10) upon determining a submersion of the vehicle (10). Further, the disclosure relates to a data processing apparatus (90), a computer program (93), a computer-readable storage medium (92), and a vehicle (10).

## Description

### TECHNICAL FIELD

The present disclosure relates to a method for determining a submersion of a vehicle.

The present disclosure also relates to a method for causing adjustment of at least one safety feature of a vehicle upon determining a submersion of the vehicle.

The present disclosure also relates to a data processing apparatus.

The present disclosure also relates to a computer program.

The present disclosure also relates to a computer-readable storage medium.

The present disclosure also relates to a vehicle.

### BACKGROUND ART

A submersion of a vehicle often escalates to a time-sensitive unsafe situation as a medium enveloping the vehicle rapidly enters the vehicle. Thus, it is of a significant importance that the submersion is reliably and accurately detected, and appropriate safety measures are subsequently performed accordingly. The submersion detection according to the conventional method utilizing cameras proves to be challenging under deep water, and another method utilizing pressure sensors is not reliable due to its dependency to the vehicle orientation.

### SUMMARY

The objective of the present disclosure is to improve a method relating to safety of the occupant(s) inside the vehicle in case of a submersion.

The problem is at least partially solved or alleviated by the subject matter of the independent claims of the present disclosure, wherein further examples are incorporated in the dependent claims.

According to a first aspect, there is provided a method for determining a submersion of a vehicle. The method comprises obtaining first data indicative of a suspension level of at least one suspension of the vehicle. The method also comprises obtaining second data indicative of a proximity to an object in surroundings of the vehicle through a first medium. The method further comprises determining, based on the obtained first data and second data, the submersion of the vehicle when both the obtained first data indicates a full extension of the at least one suspension and the obtained second data indicates a transition from the first medium to a second medium. The first medium is different from the second medium.

The term "submersion" may refer to a state, an act, or a process of being under the surface of a liquid so that the liquid completely covers the submersing object. The process may include a progression with different stages such as partially dipped in, floating on, and fully covered by the liquid covering the vehicle. Herein, the term submersion may be interchangeably used with the term "submergence". The term "obtaining" may comprise or be interchangeably used with at least one of the terms such as receiving, sensing, measuring, determining, processing, computing, and calculating. The first data may be measurements and/or processed data of such measurements. Herein, the term "when" may be interchangeably used with "if", "in case", or the like. For instance, the phrase "when both the obtained first data indicates a full extension of the at least one suspension and the obtained second data indicates a transition from the first medium to a second medium." may be interpreted as "in case or if both the obtained first data indicates a full extension of the at least one suspension and the obtained second data indicates a transition from the first medium to a second medium". The first data alone may be insufficient to reliably detect a submersion of the vehicle, as the first data may comprise information indicating another scenario, different from the submersion. For instance, the body of a vehicle may be lifted in the air in a car repair shop, in which case the suspensions may extend fully, which cannot be reliably distinguished from the submersion of the vehicle based solely on the first data. Similarly, the second data may comprise information indicative of scenarios different from vehicle submersion. The second data may comprise or be measurements of one or more of proximity sensor(s) (e.g., an ultrasonic sensor, a capacitive sensor, an optical sensor, and/or a radar sensor) located in or on the vehicle and directed towards an exterior of the vehicle, i.e., away from an interior of the vehicle, for measuring a distance to an object located outside the vehicle. The proximity sensor may assume an operation in the first medium, i.e., the transmitted signal and the reflected signal thereof propagates through the first medium. The proximity sensor may malfunction or perform poorly when said signals travel through the second medium, e.g., due to noisy and/or weak signals owing to different propagation properties between the first medium and second medium. The malfunctioning proximity sensor may be referred to as being "blocked". Such blockage of the sensor may be an indication of a change in propagation medium, which in turn may indicate a submersion of the vehicle. The first medium may be any form of air, e.g., a dry air, a humid air, or a foggy air. The second medium may be any one of water, oil, mud, or the like. The term "surroundings" herein may be any space around an exterior of the vehicle in any direction. The term "transition" herein refers to a process of a change, thus may require obtaining second data at two separate time instances.

The first data may be obtained before obtaining the second data, or vice versa. The second data may be obtained based on the obtained first data, or vice versa. For instance, upon obtaining, e.g., determining, the first data, obtaining the second data is performed. That is, one of the first and second data serves as a trigger prompting the other data to be obtained, also known as two-step approach. Alternatively, the first and second data may be obtained simultaneously.

Each of the at least one suspension of the vehicle couples a respective wheel to the vehicle body and provides stability, resulting in a smooth ride, a stable handling, and a good control. Information regarding the suspension level of each of the at least one suspension of the vehicle may be used to determine whether the vehicle is submerged. Thus, obtaining more information regarding the suspension level on more than on suspension of the vehicle may improve the reliability and accuracy of the submersion determination. For instance, when the information regarding the suspension levels of two suspensions, rather than the suspension level of only one suspension, is obtained, further information e.g., a suspension level distribution, may be determined. Such further information may contribute to an improvement in the reliability and the accuracy of the submersion determination. Similarly, the proximity monitoring in multiple directions from different locations of the vehicle may provide further insight into the parts of the vehicle that are submerged by observing the change in the media, under which a monitoring means operate.

A combination of the first and second data may contribute to eliminating the scenarios different from the submersion, leading to a reliable and accurate determination of the submersion. Thus, the method according to the first aspect advantageously achieves an improvement in the reliability and accuracy of the submersion determination of the vehicle.

In an example, the method comprises obtaining third data indicative of an orientation of a chassis of the vehicle. Determining the submersion of the vehicle is further based on the obtained third data, and further the submersion of the vehicle is determined when the obtained third data indicates a tilt of the chassis or an inversion of the chassis.

The third data may comprise or be measurements of one or more of a proximity sensor (e.g., an accelerometer, a gyroscope, and/or a magnetometer) located anywhere in or on the vehicle. The third data may be monitored over a set time period to determine a transition and/or continuation of the tilt and/or inversion, e.g., to distinguish from a temporary tilt. The term "tilt" here in may refer to a rotation about any one of a pitch, roll, and yaw axes. Specifically, the tilt about pitch and roll may be monitored to determine the tilt and the inversion of the chassis of the vehicle.

A submerged vehicle is very likely to be rotated, with respect to a reference frame, for a prolonged period, e.g., rolled on its side or floating with the front or real portion of the vehicle above the surface, i.e., the longitudinal axis of the vehicle defined as a straight traveling direction of the vehicle on a road is angled to a vector tangential to the surface of the medium. Consequently, information regarding the orientation of the vehicle contributes to further ruling out the non-submersion scenarios. Thus, the method according to the example above advantageously achieves, among others, a specific improvement in the reliability and accuracy of the submersion determination of the vehicle, when combined with the first and second data.

In an example, the method further comprises providing at least one of the obtained first data, second data, and third data for training a model usable in determining the submersion of the vehicle.

The model may be a data model.

The at least one of the obtained first data, second data, and third data may be provided to a processing means of the vehicle. Alternatively or additionally, the at least one of the obtained first data, second data, and third data may be provided to an external entity, e.g., a cloud, a data center, a base station, another vehicle, etc. The provided data may be used as an input to train a model. For instance, the first data, second data, and third data obtained before, during, and/or after the submersion of the vehicle may be collected centrally and used to train a model centrally, and the trained model may be distributed or delivered to individual vehicles, e.g., via over-the-air update. The distributed or delivered trained model may be stored in a vehicle and can be used to determine the submersion.

The step of training may be part of machine learning process, relying on e.g., supervised machine learning, unsupervised machine learning, or semi-supervised learning.

For supervised learning, generally, the training data comprises input-output data pairs, where the input data may be features or attributes, and the output data may be ground truth data, meaning the accurate label or target values associated with the input data. Simply put, the input may comprise or be labeled data, and additionally or alternatively, the output may comprise or be labeled data. During training, the supervised learning model learns how to map input data to correct output data by minimizing the difference between its output predictions and the ground truth data. That is, the labeled input and/or output data may be used to measure the accuracy of the model and aid learning over time. Common supervised learning models are e.g. linear regression, decision trees, and neural networks.

When the classification model usable is a supervised machine learning method, the step of training may comprise: inputting previously collected first, second, and/or data and associated ground truth data for respective second data, i.e. given a certain first, second, and/or third data, what should the submersion of a vehicle be. By training the model on labeled first, second, and/or third data, the trained model can subsequently be used to predict the vehicle submersion when fed with unlabeled first, second, and/or third data.

Unsupervised learning uses input data without labeled outputs. For unsupervised learning, the training data generally only comprises features or attributes, and during training the unsupervised learning model learns how to identify patterns, clusters, or associations within the data. When applied for the present disclosure, the training data would be first, second, and/or third data, and the identified patterns can be used to determine a vehicle submersion. Common unsupervised learning methods are e.g. k-means clustering, principal component analysis (PCA), and hierarchical clustering.

Semi-supervised learning uses a combination of labeled and unlabeled data. The training data, i.e. first, second, and/or third data for the present disclosure, comprises data of features or attributes whereof some is labeled, i.e. ground truth data, and some is unlabeled. During training, the model leverages both labeled and unlabeled data to improve learning. In semi-supervised learning the labeled data is used to guide the model how to classify the unlabeled data, and how to capture additional patterns in the data. Semi-supervised support vector machines (SVM) and semi-supervised neural networks are examples of semi-supervised learning methods.

Such training step in essence improves the accuracy of the model with the increase in the data size. Thus, the method according to the example above advantageously achieves, among others, a contribution to improving the accuracy of the model, which could be further used by any vehicle in the future.

In an example, determining the submersion of the vehicle is further based on a trained model.

The trained model may be a trained data model.

The trained model herein may be a model trained based on a machine learning process, relying on e.g., supervised machine learning, unsupervised machine learning, or semi-supervised learning, as described above. The trained model may be trained based on the first data, second data, and third data provided by another vehicle, where the provided data is obtained before, during, and/or after the submersion of the another vehicle. Thus, the method according to the example above advantageously achieves, among others, specifically improves the accuracy and reliability of the submersion determination.

In an example, the first data is indicative of at least one of a displacement of the at least one suspension, a force exerted on the at least one suspension, a pressure in the at least one suspension, an acceleration of the at least one suspension, and a velocity of the at least one suspension.

The parameters listed in the example above provide specific insights into the suspension level of the respective suspensions of the vehicle, resulting in a contribution to improving the accuracy and reliability of the submersion determination.

According to a second aspect, there is provided a method for causing adjustment of at least one safety feature of a vehicle upon determining a submersion of the vehicle. The method comprises determining the submersion of the vehicle according to the method of the first aspect disclosed herein. The method further comprises causing adjustment, based on the determined submersion of the vehicle, of the at least one safety feature of the vehicle.

Herein, causing adjustment of at least one safety feature may comprise controlling the at least one occupant safety feature e.g., by determining a control signal and providing the control signal to the at least one occupant safety feature.

The step of causing adjustment, based on the determined submersion of the vehicle, of the at least one safety feature of the vehicle may be performed at any time instance upon determining any stage of the submersion of the vehicle. For instance, the step may be performed with 10 seconds delay after determining that the vehicle is at least partially submerged. Alternatively, the step may be performed with 20 seconds delay after determining that the vehicle is fully submerged. The step of causing adjustment may be performed based on data indicative of different stages of the submersion. For instance, causing adjustment may be performed when the vehicle is partially submerged or fully submerged. The step of causing adjustment may be performed based on data indicative of the orientation of the vehicle. The safety feature of the at least one occupant safety feature to be adjusted may be determined based on any data disclosed herein.

The method according to the second aspect advantageously achieves, among others, improving the safety of occupants of the vehicle by performing appropriate safety measures on the vehicle.

In an example, causing adjustment, based on the detected submersion of the vehicle, of the at least one safety feature of the vehicle comprises moving, based on the detected submersion of the vehicle, at least one movable panel of the vehicle, thereby creating at least one opening in the outer skin of the vehicle.

The outer skin of the vehicle comprises may refer to any structure of the vehicle separating, or contributing to the separation of, the interior of the vehicle from the exterior of the vehicle.

A movable panel may comprise or be at least one side window panel, a sun roof panel, a rear window panel, a metal roof panel, and at least one metal door panel. Moving may comprise or be operating any operable mechanism attached to such movable panel for moving the movable panel, e.g., lowering side windows may comprise operating respective regulators attached thereto.

The method according to the example above advantageously achieves, among others, improving the safety of occupants of the vehicle by creating an opening in the vehicle so as to avoid unsafe captivity of the occupants inside the vehicle in case of a vehicle submersion.

In an example, causing adjustment, based on the detected submersion of the vehicle, of the at least one safety feature of the vehicle comprises transmitting, based on the detected submersion of the vehicle, to a base station and/or a user equipment, a signal indicative of an emergency.

The signal may be an emergency call. The signal may comprise various vehicle-related information including e.g., a vehicle type, a vehicle state, a vehicle location, a vehicle occupancy states, a vehicle submersion state, etc. The user equipment may be communicatively connected to the vehicle, e.g., via Bluetooth. The user end may be prompted by the received signal from the vehicle to further transmits the signal to a base station a signal indicative of emergency.

The method according to the example above advantageously achieves, among others, improving the safety of occupants of the vehicle by providing relevant information to an unit external to the vehicle, even in the absence of the user's request.

In an example, moving at least one movable panel of the vehicle comprises moving a pre-defined movable side window glass of the vehicle.

Alternatively, moving at least one movable panel of the vehicle comprises moving a dynamically selected movable side window glass of the vehicle.

Herein, side window glass of the vehicle are the window glasses having a surface that extends substantially in a longitudinal axis of the vehicle, i.e., an axis parallel to a forward traveling direction of the vehicle on a road, and a vertical axis of the vehicle, i.e., an axis perpendicular to the longitudinal axis and running through the base and celling of the vehicle. The side window glass may be integrated into an openable side doors, and may be operated to be raised or lowered so as to respectively close or open the window opening in the door.

The dedicated movable side window glass to be operated may be pre-defined prior to the determination of the submersion of the vehicle, or alternatively may be defined dynamically, i.e., based on the determined submersion of the vehicle. The dedicated movable side window glass to be operated may be determined based on the occupied seat position within the vehicle.

The method according to the example above advantageously achieves, among others, specifically improving the safety of occupants of the vehicle by opening specific portion of the vehicle.

The method according to the first and/or section aspect herein may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

According to a third aspect, there is provided a data processing apparatus comprising means for carrying out the method of the first aspect and/or for carrying out the method of the second aspect.

The data processing apparatus may comprise a transceiver module. The transceiver module may be configured to transmit any data, e.g., a signal indicative of an emergency signal, to an external communicative entity. The transceiver module may be configured to receive any data, e.g., trained model to be used in a submersion detection, from an external communicative entity.

Thus, the data processing apparatus according to the second aspect advantageously achieves contributing to an improvement in the reliability and accuracy of the submersion determination of the vehicle. Additionally or alternatively, the data processing apparatus according to the second aspect advantageously achieves contributing to an improvement in the safety of occupants of the vehicle by performing appropriate safety measures on the vehicle.

According to a fourth aspect, there is provided a computer program comprising instructions which, when the program is executed by a computer, cause the computer to carry out the method of the first aspect and/or to carry out the method of the second aspect.

Thus, the computer program according to the fourth aspect advantageously achieves contributing to an improvement in the reliability and accuracy of the submersion determination of the vehicle. Additionally or alternatively, the computer program according to the fourth aspect advantageously achieves contributing to an improvement in the safety of occupants of the vehicle by performing appropriate safety measures on the vehicle.

According to a fifth aspect, there is provided a computer-readable storage medium comprising instructions which, when executed by a computer, cause the computer to carry out the method of the first aspect and/or to carry out the method of the second aspect.

Thus, the computer-readable storage medium according to the fifth aspect advantageously achieves contributing to an improvement in the reliability and accuracy of the submersion determination of the vehicle. Additionally or alternatively, the computer-readable storage medium according to the fifth aspect advantageously achieves contributing to an improvement in the safety of occupants of the vehicle by performing appropriate safety measures on the vehicle.

According to a sixth aspect, there is provided a vehicle comprising at least one safety feature of the vehicle. The vehicle further comprises the data processing apparatus of third aspect disclosed herein. The at least one safety feature is communicatively connected to the data processing apparatus.

Thus, the vehicle according to the sixth aspect advantageously achieves an improvement in the reliability and accuracy of the submersion determination of the vehicle. Additionally or alternatively, the vehicle according to the sixth aspect advantageously achieves an improvement in the safety of occupants of the vehicle by performing appropriate safety measures on the vehicle.

In an example, the at least one safety feature of the vehicle comprises or is at least one movable panel of the vehicle.

A movable panel may comprise or be at least one side window panel, a sun roof panel, a rear window panel, a metal roof panel, and at least one metal door panel. Moving may comprise or be operating any operable mechanism attached to such movable panel for moving the movable panel, e.g., lowering side windows may comprise operating respective regulators attached thereto.

The vehicle according to the example above advantageously achieves, among others, improving the safety of occupants of the vehicle by comprising a movable panel, which in turn contributes to creating an opening in the vehicle so as to avoid unsafe captivity of the occupants inside the vehicle in case of a vehicle submersion.

In an example, the at least one movable panel comprises or is a pre-defined movable side window glass of the vehicle.

Herein, side window glass of the vehicle are the window glasses having a surface that extends substantially in a longitudinal axis of the vehicle, i.e., an axis parallel to a forward traveling direction of the vehicle on a road, and a vertical axis of the vehicle, i.e., an axis perpendicular to the longitudinal axis and running through the base and celling of the vehicle. The side window glass may be integrated into an openable side doors, and may be operated to be raised or lowered so as to respectively close or open the window opening in the door.

The dedicated movable side window glass to be operated may be pre-defined prior to the determination of the submersion of the vehicle, or alternatively may be defined dynamically, i.e., based on the determined submersion of the vehicle. The dedicated movable side window glass to be operated may be determined based on the occupied seat position within the vehicle.

The vehicle according to the example above advantageously achieves, among others, specifically improving the safety of occupants of the vehicle by comprising movable side window glass, which in turn contributes to opening specific portion of the vehicle.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a front view of a vehicle according to an example of the present disclosure located on a flat road
- Figure 2: shows the vehicle as shown in Figure 1 located partially on a flat road and partially submerged under water
- Figure 3: shows the vehicle as shown in Figure 1 partially submerged under water and floating on water
- Figure 4: shows the vehicle as shown in Figure 1 fully submerged underwater
- Figure 5: shows a method according to an example of the present disclosure for determining a submersion of a vehicle
- Figure 6: shows a method according to an example of the present disclosure for causing adjustment of at least one safety feature of a vehicle upon determining a submersion of the vehicle
- Figure 7: shows a flowchart of a detailed process according to an example of the present disclosure for determining a submersion of a vehicle and performing subsequent safety measures

### DETAILED DESCRIPTION

The Figures are merely schematic representations and serve only to illustrate examples of the disclosure. Identical or equivalent elements are in principle provided with the same reference signs.

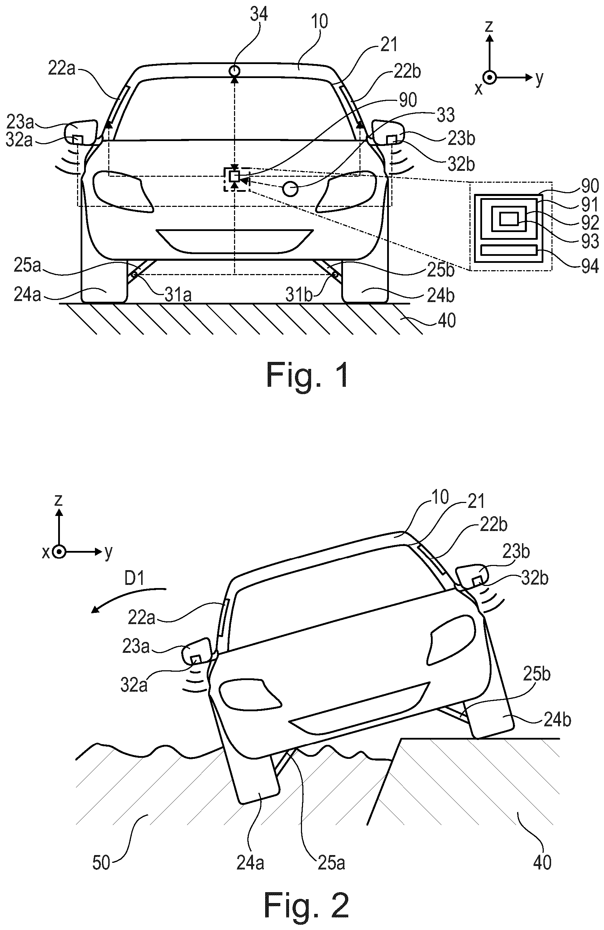

Figure 1 shows a front view of a vehicle 10.

A longitudinal-, a lateral-, and a vertical-axes of the vehicle 10 are respectively aligned with reference x-axis, y-axes, and a z-axis of Figure 1.

The vehicle 10 comprises a chassis (not shown in Figure 1) supporting the main body of the body.

The vehicle 10 comprises a front window 21, a first window 22a, and a second window 22b.

The first and second windows 22a and 22b are side windows, also referred to as lateral windows, and are integrated respectively into the right and left sides of the vehicle 10.

The side windows 22a and 22b are actuatable, i.e., the side windows 22a and 22b can be lowered or raised to respectively open or close the opening through the window frames in the side doors.

The vehicle 10 further comprises a first wing mirror 23a and a second wing mirror 23b.

The first and second wing mirrors 23a and 23b, also referred to as side-view mirrors, are located on the exterior and respectively on the right and left sides of the vehicle 10 for assisting a driver of the vehicle 10 to see areas behind and to the sides of the vehicle 10, usually outside the driver's peripheral vision.

The vehicle 10 also comprises a first and second wheels 24a and 24b, located respectively on the right and left side of the vehicle 10.

The vehicle 10 further comprises a first suspension and a second suspension 25a and 25b connecting the first and second wheels 24a and 24b, respectively, to the vehicle 10 for stabilizing and controlling the vehicle 10 thereby providing a smooth ride, stable handling, and good control.

The vehicle 10 also comprises a first and a second suspension sensors 31a and 31b for measuring displacement of the respective right and left suspensions 25a and 25b.

The vehicle 10 further comprises a first and a second proximity sensors 32a and 32b, e.g., ultrasonic sensors. Each of the first and second proximity sensors 32a and 32b measure a proximity to the road 40 that is supporting both right and left wheels 24a and 24b of the vehicle 10 (see Figure 1). The first and second proximity sensors 32a and 32b are integrated into the first and second wing mirrors 23a and 23b, and arranged downwards along the negative direction of the z-axis in Figure 1, such that the sensors transmit the signal towards the road 40 and receives the reflection of the transmitted signal.

The first and second proximity sensors 32a and 32b assume an operation in the air 45, and are configured accordingly. That is, the transmitted and reflected signals are assumed to propagate through the air 45, and the corresponding proximity is derived based thereon. When such proximity sensors 32a and 32b operate under another medium, e.g., water 50, said sensors malfunction due to different signal behaviors owing to different propagation property of such medium with respect to the medium for which the sensors are configured. A sensor working in another medium other than those configured for is referred to be "blocked". Such blockage of sensors indicates a change of media in which the sensor is operating.

The vehicle 10 further comprises a gyroscope 33 for measuring orientation and angular velocity of the vehicle 10.

The vehicle 10 also comprises a transceiver 34 for communicating with another entity.

The vehicle 10 further comprises a data processing apparatus 90.

The data processing apparatus 90 comprises a data storage unit 91 and a data processing unit 94.

The data storage unit 91 comprises a computer-readable storage medium 92.

On the computer-readable storage medium 92, there is provided a computer program 93.

The computer program 93 and, thus, also the computer-readable storage medium 92, comprise instructions which, when executed by the data processing unit 94, or, more generally speaking, a computer, cause the computer or the data processing unit 94 to carry out a method for determining a submersion of a vehicle 10 and/or for causing adjustment of at least one safety feature of a vehicle 10 upon determining a submersion of the vehicle 10.

Consequently, the data storage unit 91 and the data processing unit 94 form means for carrying out the method for determining a submersion of a vehicle 10 and/or for causing adjustment of at least one safety feature of a vehicle 10 upon determining a submersion of the vehicle 10.

The data processing apparatus 90 is communicatively coupled to the suspension sensors 31a and 31b, the proximity sensors 32a and 32b, and the orientation sensor. The data processing apparatus 90 receives and processes the measurements from said sensors.

The data processing apparatus 90 is communicatively coupled to side windows 22a and 22b of the vehicle 10 via respective side windows actuators (not shown in Figure 1). The data processing apparatus 90 generates and transmits control signals, e.g., upon determining at least a partial submergence of the vehicle 10, to the side windows actuators to lower or raise the side windows 22a and 22b respectively open or close the opening through the window frames in the side doors.

The data processing apparatus 90 communicatively coupled to the transceiver 34. The transceiver 34 receives signals, e.g., containing update-related software data, from another entity, e.g., a base station, and communicates the received signals to the data processing apparatus 90. The transceiver 34 transmits signals, e.g., emergency call, to another entity, e.g., a base station or a user end, depending on the emergency state. The data processing apparatus 90 determines the emergency state of the vehicle 10.

In the following, a scenario where the vehicle 10 shown in Figure 1 falls off an edge of the road 40 and progressively submerges into the water 50 is illustrated through Figures 2 to 4.

In Figures 2 to 4, for brevity, the processing apparatus 90, the suspension sensors 31a and 31b, the orientation sensor, and the transceivers shown in Figure 1 are omitted.

Figure 2 describes the first stage of the scenario.

The vehicle 10 is toppling over in a first direction D1 away from the road 40 and towards the water 50, and falling off an edge of the road 40, resulting in a partial submergence of the vehicle 10 into the water 50. Specifically, the right wheel and the right suspension 25a of the vehicle 10 are submerged under water 50.

As the right wheel is no longer supported by the road 40, the right suspension 25a extends.

The corresponding displacement of the suspension 25a is measured by the right suspension sensor 31a of the vehicle 10. Such data indicates that the force exerted onto the suspension 25a by the weight of the vehicle 10 is not balanced by the force exerted onto the suspension 25a by the reference surface, in this case water 50. Accordingly, such data forms a basis for determining whether the vehicle 10 is submerged in the water 50.

Simultaneously, the right proximity sensor 32a measures the proximity to the water 50 surface through the air 45. As much of the transmitted signals are scattered and absorbed by the water 50, the sensor performs poorly, e.g., due to a noisy and/or weak received signals. Such data indicates a transition in the reflective properties of the reflecting object, which may or may not indicate a process of submergence. Accordingly, such data forms a basis for determining whether the vehicle 10 is submerged in the water 50.

At the same time, the gyroscope 33 measures the change in the orientation of the vehicle 10 with respect to the reference axes, i.e., x-, y-, and z-axis, as shown in Figure 2. Such data forms a basis for determining whether the vehicle 10 is submerged in the water 50.

At this point, based on the collected sensor data, the processing apparatus 90 determines that the vehicle 10 is not submerged under water 50. Accordingly, the windows 22a and 22b are not controlled and remains raised.

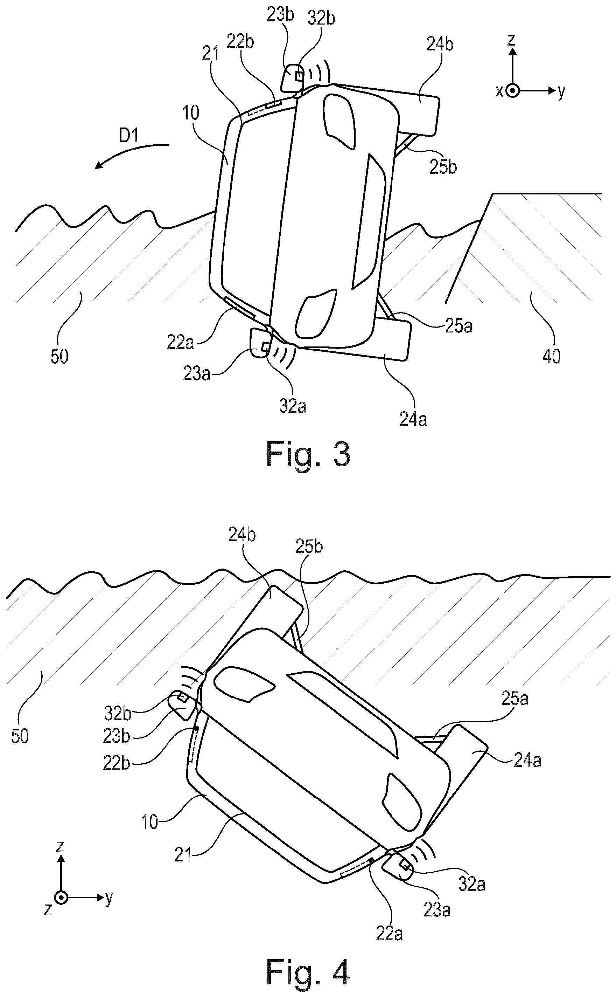

Figure 3 describes the second stage of the scenario.

At this stage, the vehicle 10 topples further over in the first direction D1, and fully floats on the water 50 rolled on its side.

Both the right and left wheels 24a and 24b are not supported by the road 40, resulting in extended the right and left suspensions 25a and 25b.

The corresponding displacement of the suspensions 25a and 25b is respectively measured by the right and left suspension sensors 31a and 31b of the vehicle 10. Such data indicates that the force exerted onto the suspensions 25a and 25b by the weight of the vehicle 10 is not balanced by the force exerted onto the suspensions 25a and 25b by the reference surface. Accordingly, such data forms a basis for determining whether the vehicle 10 is submerged in the water 50.

The right proximity sensor 32a is fully submerged under water 50. As the propagation properties of the signal propagating through water 50 differ from those through the air 45, the sensor performs poorly, e.g., due to a noisy and/or weak received signals. Such data indicates a transition of a propagation medium. This indicates a submergence of the sensor, which in turn indicates a submergence of the vehicle 10. Accordingly, such data forms a basis for determining whether the vehicle 10 is submerged in the water 50.

At the same time, the gyroscope 33 measures the change in the orientation of the vehicle 10 with respect to the reference axes, i.e., x-, y-, and z-axis, as shown in Figure 3. Such data forms a basis for determining whether the vehicle 10 is submerged in the water 50.

At this point, based on the collected sensor data, the processing apparatus 90 determines that the vehicle 10 is partially submerged under water 50. Specifically, the processing apparatus 90 determines that the right side of the vehicle 10 is submerged under water 50.

Accordingly, the processing apparatus 90 lowers the left side window 22b by feeding generated control signal to the left side window actuator. The lowered left side window (shown with bold lines in Figure 3) with respect to the initially raised position (shown with dotted lines in Figure 3) creates an opening through the window frame in the left side door of the vehicle 10. This allows the driver and/or passenger in the vehicle 10 to safely escape from the vehicle 10.

Figure 4 shows the third stage of the scenario.

At this stage, the vehicle 10 is fully submerged under water 50 and the vehicle 10 is rolled upside down, with respect to the reference axes, i.e., x-, y-, and z-axis, as shown in Figure 4.

Both the right and left wheels 24a and 24b are not supported by the road 40, resulting in extended the right and left suspensions 25a and 25b.

The corresponding displacement of the suspensions 25a and 25b is respectively measured by the right and left suspension sensors 31a and 31b of the vehicle 10. Such data indicates that the force exerted onto the suspensions 25a and 25b by the weight of the vehicle 10 is not balanced by the force exerted onto the suspensions 25a and 25b by the reference surface. Accordingly, such data forms a basis for determining whether the vehicle 10 is submerged in the water 50.

Both the right and left proximity sensors 32a and 32b are fully submerged under water 50. As the propagation properties of the signal propagating through water 50 differ from those through the air 45, the sensors performs poorly, e.g., due to a noisy and/or weak received signals. Such data indicates a transition of a propagation medium. This indicates a submergence of the sensors, which in turn indicates a submergence of the vehicle 10. Accordingly, such data forms a basis for determining whether the vehicle 10 is submerged in the water 50.

At the same time, the gyroscope 33 measures the change in the orientation of the vehicle 10 with respect to the reference axes, i.e., x-, y-, and z-axis, as shown in Figure 4. Such data forms a basis for determining whether the vehicle 10 is submerged in the water 50.

At this point, based on the collected sensor data, the processing apparatus 90 determines that the vehicle 10 is fully submerged under water 50.

Accordingly, the processing apparatus 90 lowers both the right and left side windows 22a and 22b by feeding generated control signals to the respective right and left side window actuators. The lowered right and left side windows 22a and 22b (shown with bold lines in Figure 4) with respect to the initially raised positions (shown with dotted lines in Figure 4) create openings on the sides through the window frames in the respective right and left side doors of the vehicle 10. This allows the driver and/or passenger in the vehicle 10 to safely escape from the vehicle 10.

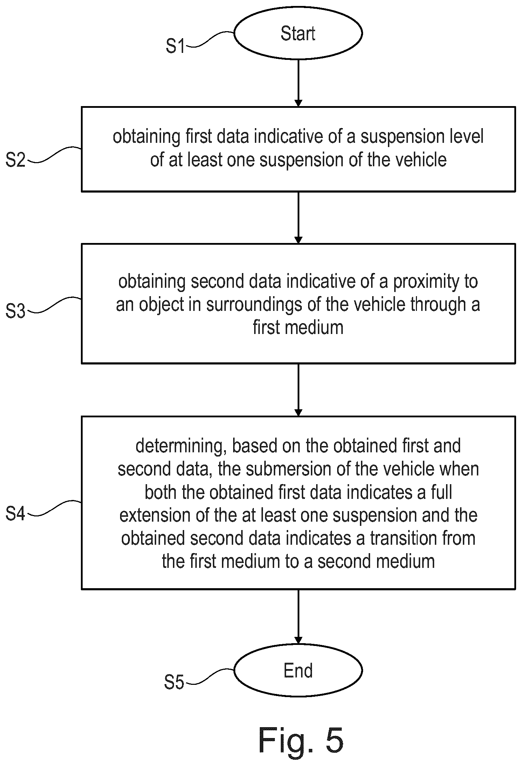

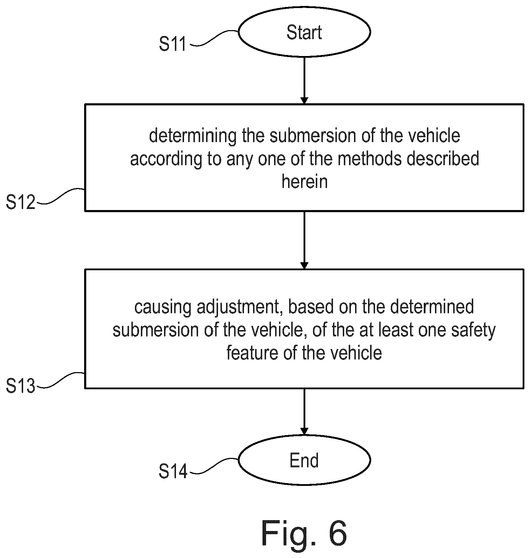

The method for determining a submergence of the vehicle 10 (see also Figure 5) and the method for causing adjustment of at least one safety feature of a vehicle 10 upon determining a submersion of the vehicle 10 (see also Figure 6) are explained in more detail.

At S1, the method for determining a submersion of a vehicle 10 is started.

At S2, first data indicative of a suspension level of at least one suspension of the vehicle 10 is obtained.

At S3, second data indicative of a proximity to an object in surroundings of the vehicle 10 through a first medium is obtained.

At S4, the submersion of the vehicle 10 is determined, based on the obtained first and second data, when both the obtained first data indicates a full extension of the at least one suspension and the obtained second data indicates a transition from the first medium to a second medium.

The first medium is different from the second medium.

At S5, the method is ended.

At S11, the method for causing adjustment of at least one safety feature of a vehicle 10 upon determining a submersion of the vehicle 10 is started.

At S12, the submersion of the vehicle 10 is determined according to any one of the methods described herein.

At S13, adjustment of the at least one safety feature of the vehicle 10 is caused based on the determined submersion of the vehicle 10.

At S14, the method is ended.

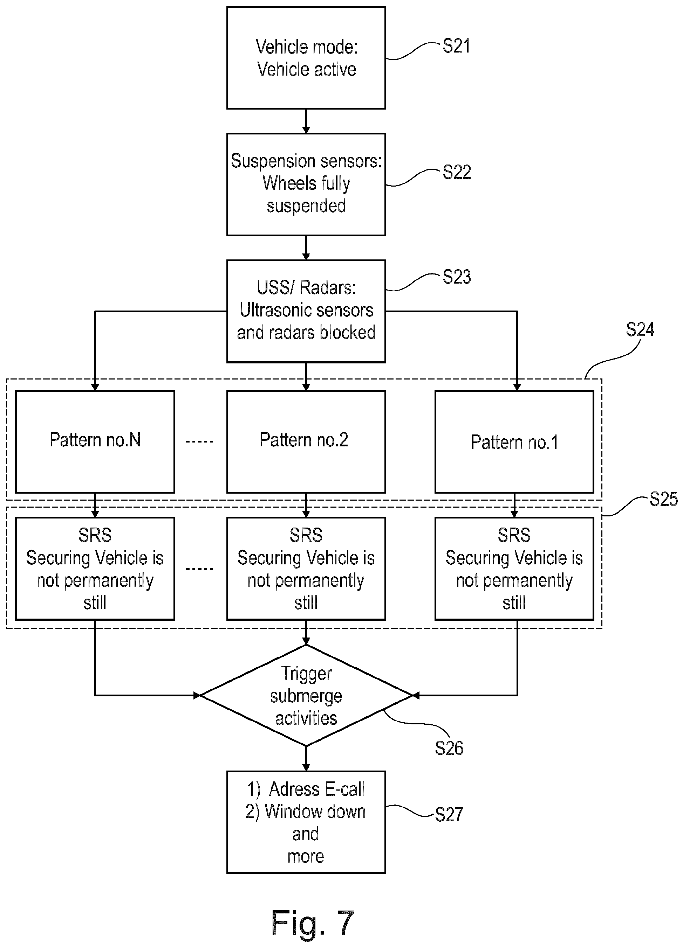

Figure 7 illustrates a flowchart of a detailed process for determining a submersion of a vehicle 10 and performing subsequent safety measures.

At S21, the vehicle 10 is in active mode, i.e., the vehicle 10 submersion detection is active.

At S22, it is determined that the readings of the suspension sensors 31a and 31b of the vehicle 10 indicate a full suspension of the wheels 24a and 24b of the vehicle 10.

At S23, upon such determination at S22, it is determined that the readings of the ultrasonic sensors (USS) and radars for measuring proximity of an object located at a distance away from the vehicle 10 indicate a blockage of the ultrasonic sensors and radars.

At S24, upon such determination at S23, the collected sensor data are fed to a pattern recognition module comprising N number of stored patterns, where N is a natural number larger than 2.

At S25, upon such determination at S24, once the pattern in the collected sensor data is recognized, it is determined that the readings of gyroscope 33 implemented in the supplemental restraint system (SRS) indicate a misalignment of the orientation of the vehicle 10 with respect to reference orientation.

At S26, upon such determination at S25, it is determined that the vehicle 10 is submerged, and accordingly the submergence activities are triggered.

At S27, as part of the submergence activities, the vehicle 10 contacts emergency services for assistance, lowers the side windows 22a and 22b down, and the like.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored on a suitable medium such as an optical storage medium or a solid-state medium supplied together with or as part of other hardware. Any reference signs in the claims should not be construed as limiting the scope of the claims.

### LIST OF REFERENCE SIGNS

- 10: Vehicle
- 21: Front window
- 22a: First window
- 22b: Second window
- 23a: First wing mirror
- 23b: Second wing mirror
- 24a: First wheel
- 24b: Second wheel
- 25a: First suspension
- 25b: Second suspension
- 31a: First suspension sensor
- 31b: Second suspension sensor
- 32a: First proximity sensor
- 32b: Second proximity sensor
- 33: Orientation sensor
- 34: Transceiver
- 40: Road
- 45: Air
- 50: Water
- 90: Data processing apparatus
- 91: Data storage unit
- 92: Computer-readable storage medium
- 93: Computer program
- 94: Data processing unit
- S1: Start
- S2: First step
- S3: Second step
- S4: Third step
- S5: End
- S11: Start
- S12: Fourth step
- S13: Fifth step
- S14: End
- S21: Sixth step
- S22: Seventh step
- S23: Eighth step
- S24: Nineth step
- S25: Tenth step
- S26: Eleventh step
- S27: Twelfth step

## Claims

1. A method for determining a submersion of a vehicle (10), the method comprising:
obtaining first data indicative of a suspension level of at least one suspension (25a, 25b) of the vehicle (10);
obtaining second data indicative of a proximity to an object in surroundings of the vehicle (10) through a first medium (45); and
determining, based on the obtained first data and second data, the submersion of the vehicle (10) when both the obtained first data indicates a full extension of the at least one suspension (25a, 25b) and the obtained second data indicates a transition from the first medium (45) to a second medium (50),
wherein the first medium (45) is different from the second medium (50).

2. The method of claim 1, further comprising:
obtaining third data indicative of an orientation of a chassis of the vehicle (10),
wherein determining the submersion of the vehicle (10) is further based on the obtained third data, and
wherein the submersion of the vehicle (10) is determined when the obtained third data indicates a tilt of the chassis or an inversion of the chassis.

3. The method of claim 1 or 2, further comprising:
providing at least one of the obtained first data, second data, and third data for training a model usable in determining the submersion of the vehicle (10).

4. The method of any one of the preceding claims, wherein determining the submersion of the vehicle (10) is further based on a trained model.

5. The method of any one of the preceding claims, wherein the first data is indicative of at least one of a displacement of the at least one suspension (25a, 25b), a force exerted on the at least one suspension (25a, 25b), a pressure in the at least one suspension (25a, 25b), an acceleration of the at least one suspension (25a, 25b), and a velocity of the at least one suspension (25a, 25b).

6. A method for causing adjustment of at least one safety feature of a vehicle (10) upon determining a submersion of the vehicle (10), the method comprising:
determining the submersion of the vehicle (10) according to the method of any one of the preceding claims; and
causing adjustment, based on the determined submersion of the vehicle (10), of the at least one safety feature of the vehicle (10).

7. The method of claim 6, wherein causing adjustment, based on the detected submersion of the vehicle (10), of the at least one safety feature of the vehicle (10) comprises:
moving, based on the detected submersion of the vehicle (10), at least one movable panel of the vehicle (10), thereby creating at least one opening in the outer skin of the vehicle (10); and/or
transmitting, based on the detected submersion of the vehicle (10), to a base station and/or a user equipment, a signal indicative of an emergency.

8. The method of claim 7, wherein moving at least one movable panel of the vehicle (10) comprises moving a pre-defined movable side window glass (22a, 22b) of the vehicle (10).

9. A data processing apparatus (90) comprising means for carrying out the method of any one of the preceding claims.

10. A computer program (93) comprising instructions which, when the program is executed by a computer, cause the computer to carry out the method of claims 1 to 8.

11. A computer-readable storage medium (92) comprising instructions which, when executed by a computer, cause the computer to carry out the method of claims 1 to 8.

12. A vehicle (10) comprising:
at least one safety feature of the vehicle (10); and
the data processing apparatus (90) of claim 9,
wherein the at least one safety feature is communicatively connected to the data processing apparatus (90).

13. The vehicle (10) of claim 12, wherein the at least one safety feature of the vehicle (10) comprises or is at least one movable panel of the vehicle (10).

14. The vehicle (10) of claim 13, wherein the at least one movable panel (22a, 22b) comprises or is a pre-defined movable side window glass (22a, 22b) of the vehicle (10).
